(19) Europäisches Patentamt
European Patent Office
Office européen des brevets

(11) **EP 3 149 705 B1**

(12) **FASCICULE DE BREVET EUROPEEN**

(45) Date de publication et mention de la délivrance du brevet:
**25.12.2019 Bulletin 2019/52**

(21) Numéro de dépôt: **15731646.4**

(22) Date de dépôt: **22.05.2015**

(51) Int Cl.:
**G06T 7/00** *(2017.01)*

(86) Numéro de dépôt international:
**PCT/FR2015/051359**

(87) Numéro de publication internationale:
**WO 2015/181477 (03.12.2015 Gazette 2015/48)**

(54) **PROCÉDÉ ET DISPOSITIF D'ESTIMATION D'UN INDICE DE QUALITÉ D'UNE IMAGE 3D D'UNE PIÈCE DE MATÉRIAU COMPOSITE**

VERFAHREN UND VORRICHTUNG ZUR SCHÄTZUNG EINES QUALITÄTSINDEXES EINES 3D-BILDES EINES STÜCKS VERBUNDSTOFFMATERIAL

METHOD AND DEVICE FOR ESTIMATION OF A QUALITY INDEX OF A 3-D IMAGE OF A PIECE OF COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2014 FR 1454731**

(43) Date de publication de la demande:
**05.04.2017 Bulletin 2017/14**

(73) Titulaires:
• **SAFRAN AIRCRAFT ENGINES**
**75015 Paris (FR)**
• **SAFRAN**
**75015 Paris (FR)**

(72) Inventeurs:
• **MORARD, Vincent**
**78000 Versailles (FR)**
• **PARRA, Estelle**
**78640 Chevreuse (FR)**
• **SCHNEIDER, Julien**
**77550 Moissy-Cramayel Cedex (FR)**
• **TOURAIS, David**
**75014 Paris (FR)**

(74) Mandataire: **Cabinet Beau de Loménie**
**158, rue de l'Université**
**75340 Paris Cedex 07 (FR)**

• **Johann Kastner ET AL: "Defect and Porosity Determination of Fibre Reinforced Polymers by X-ray Computed Tomography", , 1 janvier 2010 (2010-01-01), pages 1-12, XP055158650, Extrait de l'Internet: URL:http://www.ndt.net/article/aero2010/pa pers/we1a2.pdf [extrait le 2014-12-15]**
• **BAZI ET AL: "Image thresholding based on the EM algorithm and the generalized Gaussian distribution", PATTERN RECOGNITION, ELSEVIER, GB, vol. 40, no. 2, 29 octobre 2006 (2006-10-29), pages 619-634, XP005837137, ISSN: 0031-3203, DOI: 10.1016/J.PATCOG.2006.05.006**
• **ALI MUSRRAT ET AL: "Multi-level image thresholding by synergetic differential evolution", APPLIED SOFT COMPUTING, vol. 17, 31 décembre 2013 (2013-12-31), pages 1-11, XP028614045, ISSN: 1568-4946, DOI: 10.1016/J.ASOC.2013.11.018**
• **HOUSTON A N ET AL: "Effect of scanning and image reconstruction settings in X-ray computed microtomography on quality and segmentation of 3D soil images", GEODERMA, vol. 207, 11 juin 2013 (2013-06-11), pages 154-165, XP028676164, ISSN: 0016-7061, DOI: 10.1016/J.GEODERMA.2013.05.017**

(56) Documents cités:
**US-A1- 2007 019 861**

- **Prashanth Reddy Marpu ET AL: "A PROCEDURE FOR AUTOMATIC OBJECT-BASED CLASSIFICATION", , 1 janvier 2008 (2008-01-01), XP055158662, Extrait de l'Internet: URL:http://www.isprs.org/proceedings/XXXVI /4-C42/Papers/12_Object-based approach generic issues - IC I/OBIA2006_Marpu_Niemeyer_Gloaguen.pdf [extrait le 2014-12-15]**

**Description**

Arrière-plan de l'invention

L'invention concerne le domaine général de l'imagerie et plus particulièrement des images en trois dimensions (ou images 3D) de pièces de matériaux composites (ex. pièces constituées de fibres de carbone et d'une matrice ou résine de carbone), telles que par exemple des images de pièces de matériaux composites obtenues par tomographie numérique.

Elle a une application privilégiée mais non limitative dans de nombreuses industries mécaniques, et en particulier dans l'industrie aéronautique.

Il est connu aujourd'hui de procéder à des contrôles non destructifs sur des pièces de matériaux composites à partir d'images 3D obtenues par tomographie numérique, en vue de contrôler la santé matière (i.e. absence de défauts) de ces pièces.

La tomographie numérique est une technique d'imagerie qui permet, à partir d'une succession de photographies prises d'une pièce de matériau composite, de reconstruire une image en trois dimensions codée en niveaux de gris de cette pièce. Le niveau de gris d'un voxel de l'image 3D est proportionnel à la densité de matière de la pièce en ce voxel. Cette image 3D permet de déceler automatiquement, à partir de techniques d'analyse d'images appropriées, des éventuels défauts affectant la pièce de matériau inspectée.

Certaines méthodes d'analyse d'images sont toutefois fortement dépendantes de la qualité de l'image tomographique 3D considérée.

Il existe dans l'état de la technique des normes qui décrivent des méthodes de mesure de la qualité d'une image tomographique. De telles normes sont par exemple :

- la norme américaine ASTM (American Society for Testing and Materials) E1441-00RT décrite dans le document intitulé « Standard Guide for Computed Tomography Imaging », qui définit l'utilisation de la tomographie informatisée pour les contrôles non destructifs et des métriques de qualité des tomographes ; et
- son équivalent européen, la norme NF EN 16016-3, décrite plus en détail dans le document intitulé « Essais non destructifs - Méthodes par rayonnements - Tomographie informatisée Partie 3 : Fonctionnement et interprétation ».

Ces normes proposent notamment les métriques ou indices de qualité suivant(e)s :

- un écart-type de bruit mesuré sur une zone homogène de l'image 3D, non déformée par des artéfacts ;
- un rapport signal-sur-bruit défini comme étant le ratio du niveau de gris moyen de la pièce de matériau considérée sur l'écart-type du bruit ;
- un rapport contraste-sur-bruit défini comme étant le ratio de la valeur absolue de la différence entre le niveau de gris moyen de la pièce étudiée et le niveau de gris moyen du fond de l'image 3D sur l'écart type du bruit.

Ces métriques ont toutefois été conçues pour une pièce constituée d'un matériau unique, typiquement pour une pièce métallique.

Or, pour un matériau composite, il est impossible de trouver dans l'image 3D une zone suffisamment représentative (c'est-à-dire suffisamment grande pour être statistiquement viable) qui soit homogène, autrement dit composée d'une phase unique de matériau puisque par construction du matériau composite les fibres et la résine sont intimement liées.

Par conséquent, si l'on souhaite utiliser de telles métriques pour estimer la qualité d'une image 3D d'une pièce de matériau composite, il est nécessaire d'ajouter des barres de référence constituées d'un matériau unique dans le montage considéré lors de l'acquisition de l'image 3D de sorte à rendre possible l'estimation de ces métriques.

Quand bien une telle contrainte serait respectée, il n'en demeure pas moins que les métriques obtenues ne font intervenir qu'une seule phase de matériau (voire également le fond de l'image 3D selon la métrique considérée), et sont donc incomplètes pour caractériser la qualité d'une image 3D d'une pièce en matériau composite.

Le document D1 US 2007/019861 concerne un procédé de génération d'un masque de fond à partir d'une image codée en valeur d'intensité avec une zone de fond bruyante. Le procédé consiste à générer un histogramme de valeur d'intensité de l'image; ajuster une courbe modèle à une sous-zone de l'histogramme de valeur d'intensité; calculer une valeur de seuil dans l'histogramme de valeur d'intensité à partir des paramètres d'ajustement de la courbe de modèle; et générer le masque de fond à partir d'au moins une zone d'image définie appartenant au bruit de fond en ajoutant tous les pixels d'intensités inférieures au seuil au masque de fond lorsqu'il est connecté à la zone d'image par l'intermédiaire de pixels dont les intensités sont également inférieures à la valeur de seuil.

Objet et résumé de l'invention

La présente invention permet notamment de pallier ces inconvénients en proposant un procédé permettant d'estimer de manière automatique et objective la qualité d'une image 3D d'une pièce en matériau composite.

Plus spécifiquement, elle propose un procédé d'estimation d'au moins un indice de qualité d'une image en trois dimensions codée en niveaux de gris d'une pièce de matériau composite, le procédé d'estimation étant décrit dans la revendication 1.

Corrélativement, l'invention vise également un dispositif d'estimation d'au moins un indice de qualité d'une image en trois dimensions codée en niveaux de gris d'une pièce de matériau composite, le dispositif d'estimation étant décrit dans la revendication 11.

Aucune limitation n'est attachée à l'origine de l'image 3D. Il peut s'agir d'une image 3D reconstruite par tomographie numérique ou par tout autre moyen.

L'invention propose une méthode robuste, rapide (requérant seulement quelques secondes par image) et répétitive offrant un outil objectif permettant de mesurer la qualité d'une image 3D codée en niveaux de gris d'une pièce de matériau composite. Cette méthode ne requiert aucune image ou barre de référence ni aucun outillage spécifique pour pouvoir estimer les indices de qualité ce qui la rend particulièrement simple à mettre en œuvre.

Elle s'appuie avantageusement sur le fait d'une part que la qualité de l'image 3D est essentiellement affectée par un bruit aléatoire lié au système d'acquisition de l'image et dont la distribution est sensiblement gaussienne (moyennant éventuellement un traitement préalable de l'image 3D pour éliminer des artefacts basses fréquences présents dans l'image), et sur le fait d'autre part, que les différentes phases d'un matériau composite n'ont pas la même densité de matière et sont donc « visibles » (c'est-à-dire dissociables) dans l'image 3D (elles correspondent en effet à des niveaux de gris différents). Il résulte de ces constatations que les niveaux de gris de l'image 3D correspondant aux différentes phases du matériau composite (ex. résine, torons, fibres, etc.) suivent une répartition gaussienne. Les inventeurs proposent ainsi judicieusement de réaliser une déconvolution de l'histogramme de l'image 3D en gaussiennes (ou de façon équivalente en distributions gaussiennes si l'histogramme est normalisé), puis d'exploiter les paramètres caractérisant les gaussiennes extraites via cette déconvolution pour dériver des indices de qualité de l'image 3D.

En effet, pour un système d'acquisition d'images 3D parfait (i.e. sans bruit), les différentes phases du matériau composite devraient se traduire sur l'histogramme de l'image 3D par des représentations de type diracs, parfaitement séparées et positionnées à des niveaux de gris correspondant respectivement aux densités de matière associées aux différentes phases. La présence d'un bruit gaussien aléatoire a pour effet de transformer ces diracs en gaussiennes. Autrement dit, l'histogramme de l'image 3D est constitué d'une mixture (somme) de gaussiennes.

Les inventeurs ont eu l'idée d'exploiter avantageusement les paramètres caractérisant ces gaussiennes pour dériver des indices de qualité de l'image 3D, et notamment leurs moyennes et/ou écart-types (ou de manière équivalente leurs variances), et/ou encore la proportion de chaque gaussienne au sein de la mixture de gaussiennes que représente l'histogramme de l'image 3D. En effet, plus les gaussiennes sont isolées et éloignées les unes des autres, plus l'image 3D peut être considérée comme étant de bonne qualité. Au contraire, plus les gaussiennes sont proches et superposées, plus l'image 3D peut être considérée comme étant de mauvaise qualité.

Le nombre de gaussiennes extraites de l'histogramme dépend du matériau composite considéré et correspond préférentiellement aux nombres de phases distinctes présentes dans le matériau composite considéré. Il est choisi préférentiellement égal à 3.

Il convient de noter que le procédé proposé par l'invention, à l'exception du nombre de gaussiennes, ne dépend d'aucun paramètre extérieur. Il est par conséquent relativement facile à mettre en œuvre.

L'étape d'extraction des gaussiennes (ou de manière équivalente de déconvolution de gaussiennes) est réalisée par exemple en utilisant un algorithme d'espérance-maximisation (EM pour « Expectation-Maximization » en anglais). Cet algorithme est décrit en détail dans le document de A.P. Dempster et al. intitulé « Maximum Likelihood from incomplete data with the EM algorithm », Journal of the Royal Statistical Society, Series B39 (1): 1-38.

Il permet d'estimer automatiquement et avec précision les différents paramètres caractérisant les gaussiennes mixées dans l'histogramme de l'image 3D.

En outre, son utilisation est possible y compris lorsqu'une différence de densité faible existe entre les différentes phases du matériau composite. En effet, le matériau composite étant formé d'une résine et de fibres imprégnées de résine, un contraste faible sur l'image 3D entre les phases du matériau composite peut être constaté. En outre, ces composants peuvent être présents dans le matériau composite en proportions très distinctes. L'algorithme EM permet de s'affranchir des difficultés résultant de ces caractéristiques des matériaux composites et permet d'extraire facilement et automatiquement les gaussiennes (et leurs paramètres) mixées dans l'histogramme de l'image 3D.

En variante, d'autres méthodes peuvent être utilisées pour extraire les gaussiennes de l'histogramme et déterminer leurs paramètres, comme par exemple une méthode Monte Carlo basée sur des chaînes de Markov, une méthode des moments (ou « moment matching » en anglais), une méthode spectrale ou graphique, voire une simulation.

Dans un mode particulier de réalisation, ledit au moins un indice de qualité de l'image comprend un indice I1 obtenu en moyennant sur chaque paire $(G_i, G_{i+1})$ de gaussiennes contiguës extraites de l'histogramme, un indice de qualité I1(i) associé à ladite paire $(G_i, G_{i+1})$ et estimé selon :

$$I1(i) = f(m_i - m_{i+1} + \omega.(\sigma_i + \sigma_{i+1}))$$

où :

- $m_i$ et $m_{i+1}$ désignent respectivement les moyennes des gaussiennes $G_i$ et $G_{i+1}$ avec $m_i < m_{i+1}$ ;
- $\sigma_i$ et $\sigma_{i+1}$ désignent respectivement les écart-types des gaussiennes $G_i$ et $G_{i+1}$ ;
- $\omega$ désigne une constante prédéterminée ; et

f désigne une fonction bornée prenant ses valeurs entre 0 et 1.

La fonction f est par exemple une fonction sigmoïde ou une fonction définie à partir de la fonction tangente hyperbolique. Elle est choisie préférentiellement pour que l'indice de qualité I1 tende vers 1 lorsque les gaussiennes sont bien séparées et vers 0 lorsqu'elles sont confondues ou superposées (séparation des différentes phases du matériau impossible sur l'image 3D).

Dans un autre mode de réalisation, ledit au moins un indice de qualité de l'image comprend un indice I2 quantifiant un recouvrement entre les gaussiennes extraites de l'histogramme.

Plus les gaussiennes sont superposées, plus la zone de recouvrement est importante, et plus la qualité de l'image 3D est discutable.

Dans un autre mode de réalisation encore, ledit au moins un indice de qualité de l'image comprend, pour au moins une gaussienne G extraite de l'histogramme, un indice I3(G) associé à ladite gaussienne et défini comme le ratio entre la moyenne et l'écart type de cette gaussienne.

Autrement dit, selon ce mode de réalisation, on évalue un rapport signal sur bruit sur chaque gaussienne indépendamment les unes des autres.

Il convient de noter que le calcul du rapport signal-sur-bruit est largement utilisé dans l'état de la technique pour estimer la qualité d'une image. Toutefois, comme mentionné précédemment, pour une pièce de matériau composite, il est très difficile voire impossible de trouver une région de matière complètement homogène pour réaliser une mesure de l'écart type du bruit.

L'invention, grâce à l'étape d'extraction des gaussiennes de l'histogramme de l'image 3D, permet de calculer très aisément un rapport signal-sur-bruit précis pour chaque gaussienne extraite qui constitue alors une zone homogène rendant possible un tel calcul. Le critère de Rose, connu de l'homme du métier, affirme par ailleurs qu'il est possible de distinguer les caractéristiques d'une image avec une confiance de 100% pour un rapport signal-sur-bruit supérieur à 5.

Bien entendu, d'autres indices de qualité peuvent être considérés et estimés à partir des paramètres des gaussiennes extraites de l'histogramme de l'image 3D.

On note que les indices précités n'évoluent pas nécessairement de façon similaire en fonction de la qualité de l'image 3D. Le choix de l'un et/ou l'autre des indices précités, ou de plusieurs de ces indices, dépend de l'application visée. Ces indices peuvent être avantageusement utilisés par exemple pour optimiser les paramètres d'acquisition et de reconstruction d'images 3D tomographiques, pour comparer des images 3D provenant de différents systèmes d'acquisition entre elles (ex. de plusieurs tomographes), pour déceler des défauts du système d'acquisition (ex. dérives du détecteur ou du tube à rayons X du tomographe en chaîne de production), etc. En d'autres mots, l'invention a une application aussi bien en expertise qu'en ligne de production (ex. pour une validation qualité).

Dans un mode particulier de réalisation, le procédé d'estimation comprend en outre une étape de normalisation de l'histogramme, les gaussiennes étant extraites de l'histogramme normalisé lors de l'étape d'extraction (les gaussiennes sont alors des distributions gaussiennes à proprement parler).

Cette normalisation permet de s'affranchir de la taille (i.e. nombre de voxels) de l'image 3D considérée. Les indices de qualité alors obtenus pour différentes images 3D sont facilement comparables entre eux, y compris lorsque ces images ont des tailles différentes.

Dans un autre mode de réalisation, le procédé d'estimation comprend en outre une étape de normalisation des paramètres caractérisant les gaussiennes, ledit au moins un indice de qualité de l'image étant estimé à partir des paramètres normalisés caractérisant les gaussiennes.

On obtient ainsi un indice de qualité compris entre 0 et 1, facilement interprétable.

Dans un mode particulier de réalisation, les différentes étapes du procédé d'estimation sont déterminées par des instructions de programmes d'ordinateurs.

En conséquence, l'invention vise aussi un programme d'ordinateur sur un support d'informations, ce programme étant susceptible d'être mis en œuvre dans un dispositif d'estimation ou plus généralement dans un ordinateur, ce programme comportant des instructions adaptées à la mise en œuvre des étapes d'un procédé d'estimation tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé et le dispositif d'estimation selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente un dispositif d'estimation conforme à l'invention, dans un mode particulier de réalisation ;
- la figure 2 représente, sous forme d'ordinogramme, les principales étapes d'un procédé d'estimation conforme à l'invention dans un mode de réalisation dans lequel il est mis en œuvre par le dispositif d'estimation de la figure 1 ;
- les figures 3A à 3D illustrent un histogramme obtenu à partir d'une image 3D tomographique et des gaussiennes extraites de cet histogramme conformément à l'invention ;
- les figures 4A à 4F illustrent l'évolution d'indices de qualité estimés au moyen du procédé d'estimation selon l'invention en fonction des paramètres des gaussiennes extraites.

Description détaillée de l'invention

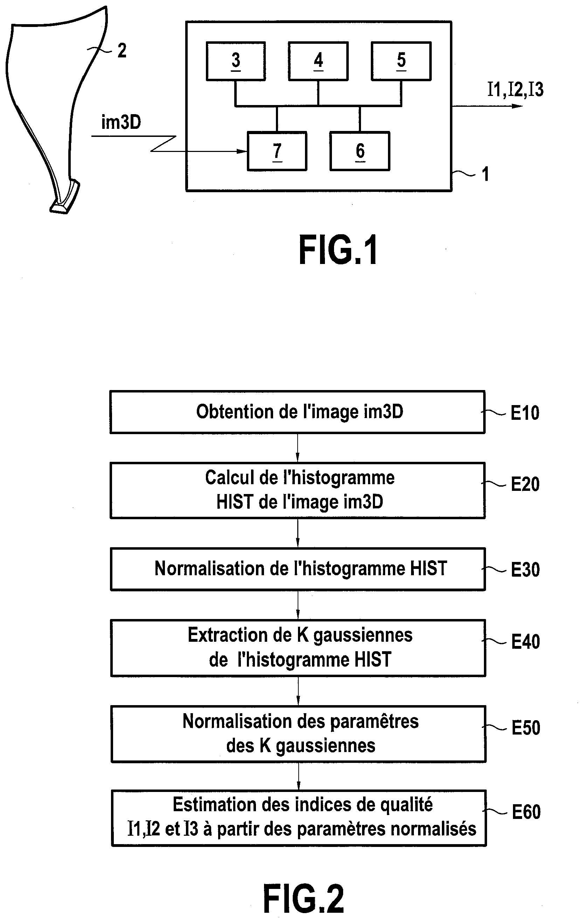

La **figure 1** représente, dans son environnement, un dispositif d'estimation 1 d'au moins un indice de qualité d'une image im3D en trois dimensions d'une pièce 2 de matériau composite, conforme à l'invention dans un mode particulier de réalisation.

La pièce considérée ici est par exemple une aube de soufflante d'un avion réalisée dans un matériau composite constitué de fibres de carbone imprégnées d'une matrice (résine) de carbone.

Toutefois, cet exemple n'est donné qu'à titre illustratif et aucune limitation n'est attachée au type de pièce considérée, ni même au matériau composite dans lequel cette pièce est réalisée. Ainsi l'invention s'applique à tout type de matériau composite à renfort fibreux tissé, tressé ou encore cousu, qui trouvent de nombreuses applications notamment, mais pas uniquement, dans le domaine de l'aéronautique et de la construction de pièces pour avions. En outre l'image 3D considérée peut représenter indifféremment la pièce 2 dans son intégralité ou seulement un échantillon de celle-ci.

Dans l'exemple envisagé ici, l'image im3D est une image 3D codée en niveaux de gris obtenue par tomographie numérique. Comme mentionné précédemment, la tomographie numérique est une technique connue d'imagerie numérique qui consiste à acquérir, grâce à l'émission par un générateur de rayons X d'un faisceau traversant la pièce, une succession de « photographies » ou de radiographies de cette pièce selon différents plans de l'espace. Ces photographies ou radiographies, aussi désignées par images intermédiaires ou encore projections, sont ensuite traitées et combinées pour reconstruire le volume en trois dimensions de la pièce sous la forme d'une image 3D codée en niveaux de gris.

Le niveau de gris d'un voxel de l'image im3D est proportionnel à la densité de matière de la pièce 2 de matériau composite en ce voxel. La résine et les fibres de carbone constituant le matériau composite de la pièce 2 n'ayant pas les mêmes densités, elles apparaissent ainsi en théorie avec des niveaux de gris différents dans l'image im3D.

De manière générale, on suppose qu'un nombre prédéterminé K de phases de matériau peuvent être distinguées dans l'image en trois dimensions im3D, K étant un entier supérieur ou égal à 2. Dans l'exemple envisagé ici, on suppose par souci de simplification que K=2.

Il convient de noter que lorsqu'on utilise une technique de tomographie par rayons X, des artéfacts « basses fréquences » peuvent être présents dans les images 3D obtenues après reconstruction et perturber l'analyse de ces images, ces artéfacts se traduisant par une dérive des niveaux de gris représentant une même matière (ex. résine ou fibres). Ainsi par exemple, la valeur moyenne des niveaux de gris de la résine peut, du fait de la présence de tels artefacts, ne pas être constante sur l'ensemble de l'image.

Divers traitements peuvent être appliqués à l'image 3D pour limiter l'influence de ces artefacts.

Une première approche peut consister à choisir un échantillon de taille réduite de l'image 3D positionné à un endroit de la pièce 2 où ces artefacts n'ont aucune influence.

Une seconde approche peut consister à détecter une dérive des niveaux de gris pour une même matière et à la corriger, à l'aide de techniques de correction connues en soi. Sur l'image corrigée alors obtenue, un échantillon de la pièce 2 de taille et d'emplacement quelconques peut ensuite être sélectionné.

Dans la suite de la description, l'image im3D désigne l'image 3D de la pièce 2 ou d'un échantillon dûment sélectionné de cette pièce 2 dans laquelle l'influence des artefacts basses fréquences précités peut être considérée comme négligeable, éventuellement du fait de l'application d'un traitement à l'image 3D selon l'une ou l'autre des approches proposées précédemment par exemple. Il en résulte que la qualité de l'image im3D considérée est affectée essentiellement par un bruit aléatoire dont la distribution est sensiblement gaussienne.

En variante, d'autres techniques d'obtention d'une image 3D codée en niveaux de gris de la pièce 2 de matériau composite peuvent être envisagées, comme par exemple une technique MET (pour Microscopie Electronique en Transmission).

Dans le mode de réalisation décrit ici, le dispositif d'estimation 1 est un ordinateur dont l'architecture matérielle comprend notamment un un processeur 3, des mémoires 4-6 (ex. une mémoire morte et/ou un disque dur 4, une mémoire vive 5 et une mémoire non volatile 6), et des moyens de communication 7. Ces moyens de communication 7 comprennent notamment des moyens d'entrée/sortie (ex. souris, clavier, écran, etc.) et une ou des interfaces de communication diverses (ex. port USB (Universal Serial Bus), carte réseau, etc.) qui permettent au dispositif d'estimation 1 d'obtenir en particulier l'image en trois dimensions im3D.

La mémoire morte et/ou le disque dur 4 constitue un support d'enregistrement lisible par le processeur 3 et sur lequel est enregistré un programme d'ordinateur conforme à l'invention, comportant des instructions pour l'exécution des étapes d'un procédé d'estimation d'au moins un indice de qualité d'une image en trois dimensions selon l'invention, les étapes de ce procédé étant décrites ultérieurement en référence à la figure 2, dans un mode particulier de réalisation.

Ce programme d'ordinateur définit de façon équivalente des modules fonctionnels du dispositif d'estimation 1 (modules logiciels ici), tels qu'un module d'obtention d'un histogramme à partir d'une image 3D, un module d'extraction de distributions gaussiennes de cet histogramme et un module d'estimation d'indices de qualité à partir de paramètres caractérisant les distributions gaussiennes extraites. Les fonctions de ces modules sont décrites plus en détail en référence aux étapes du procédé d'estimation.

Nous allons maintenant décrire, en référence à la **figure 2**, les principales étapes du procédé d'estimation selon l'invention, dans un mode particulier de réalisation dans lequel elles sont mises en œuvre par le dispositif d'estimation 1 représenté à la figure 1.

Dans le mode de réalisation décrit ici, le dispositif d'estimation 1 estime une pluralité d'indices de qualité I1, I2 et I3 de l'image en trois dimensions im3D. Cette image lui est fournie via ses moyens de communications 7 (étape E10).

En variante, l'invention peut être appliquée sur une partie seulement de l'image im3D. Toutes les étapes décrites ultérieurement sont alors réalisées sur cette partie seulement de l'image im3D.

Sur réception de l'image im3D, le dispositif d'estimation 1 calcule l'histogramme HIST de l'image im3D (étape E20).

L'histogramme HIST est une représentation graphique indiquant, pour chaque classe d'une pluralité de classes de niveaux de gris (représentées en abscisse de l'histogramme), le nombre de voxels de l'image im3D ayant des niveaux de gris appartenant à cette classe (représenté en ordonnée de l'histogramme). Il permet avantageusement de regrouper synthétiquement l'information contenue dans l'image im3D sans se soucier de l'organisation spatiale des voxels de l'image.

Chaque classe de niveaux de gris peut comprendre un ou plusieurs niveaux de gris. Dans le mode de réalisation décrit ici, le nombre de classes et le nombre de niveaux de gris par classe considérés pour construire l'histogramme HIST dépendent de la dynamique DYN de l'image im3D.

Plus précisément ici, pour des dynamiques DYN en bits inférieures ou égales à 16 bits, on envisage un niveau de gris par classe, autrement dit pour une dynamique de DYN bits, $2^{DYN}$ classes de niveaux de gris. Pour des images ayant une dynamique supérieure à 16 bits ou une dynamique en virgule flottante, le nombre de classes représentées dans l'histogramme HIST est limité à $2^{16}=65536$ classes.

Ainsi par exemple pour une image ayant une dynamique de DYN=32 bits, l'histogramme HIST comprend $2^{16}$ classes comprenant chacune $2^{16}$ niveaux de gris.

De même, pour une image 3D ayant une dynamique en virgule flottante, le nombre de classes maximal est fixé à $2^{16}$, et le nombre de niveaux de gris compris dans chaque classe est calculé automatiquement en prenant en compte la valeur minimale et la valeur maximale des niveaux de gris susceptibles d'être présents dans l'image.

Bien entendu, d'autres hypothèses concernant le nombre de classes et le nombre de niveaux de gris par classe peuvent être envisagées pour construire l'histogramme HIST, en fonction notamment d'un compromis entre complexité et précision souhaitée de l'information reproduite par l'histogramme.

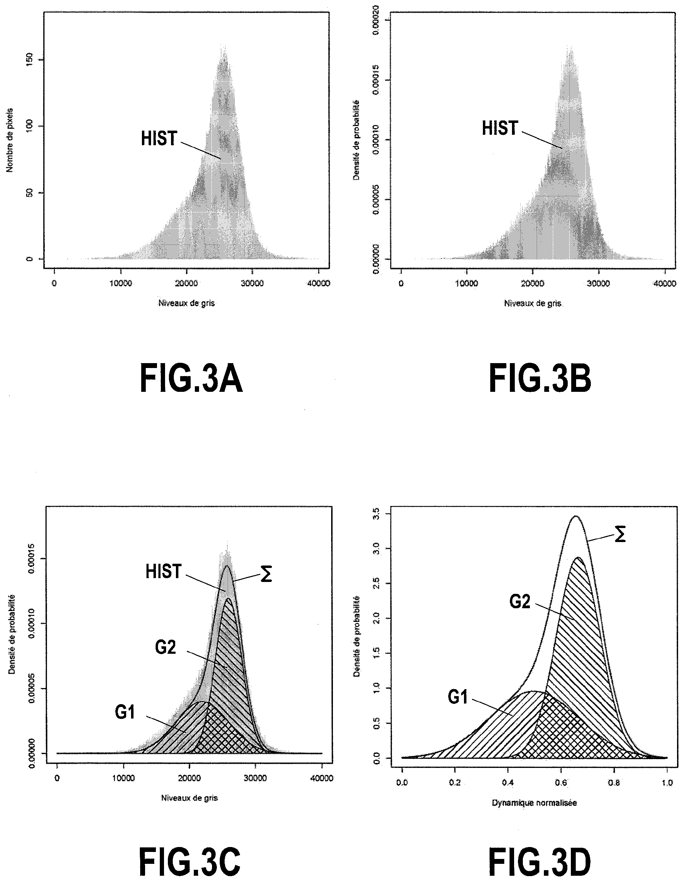

La **figure 3A** illustre, à titre d'exemple, l'histogramme d'une image tomographique 3D d'une pièce de matériaux composite, ayant une dynamique de 16 bits.

Dans le mode de réalisation décrit ici, le dispositif d'estimation 1 normalise à 1 l'histogramme HIST obtenu à l'étape E20 (étape E30). Cette normalisation (optionnelle) vise à rendre l'histogramme HIST indépendant du nombre de voxels de l'image im3D.

Cette normalisation est réalisée par le dispositif d'estimation 1 en divisant pour chaque classe de niveaux de gris, le nombre de voxels appartenant à cette classe reporté par l'histogramme HIST par le nombre total de voxels dans l'image 3D. L'ordonnée de l'histogramme obtenu après normalisation devient ainsi homogène à une densité de probabilité.

La **figure 3B** illustre l'histogramme obtenu après normalisation de l'histogramme HIST illustré à la figure 3A. Par souci de simplification, on désigne également par HIST l'histogramme ainsi normalisé.

Il convient de noter que cette étape de normalisation est optionnelle. Elle permet avantageusement de dériver des indices de qualité indépendants de la taille de l'image 3D considérée (la taille de l'image étant définie par le nombre de voxels de l'image). De tels indices offrent la possibilité de comparer aisément entre elles des images 3D ayant des tailles différentes. On comprend bien toutefois que si les images 3D considérées sont de mêmes tailles, une telle normalisation n'est pas utile.

Le dispositif d'estimation 1 extrait ensuite de l'histogramme normalisé HIST (ou de l'histogramme non normalisé le cas échéant si l'étape E30 n'est pas mise en œuvre), une pluralité de (i.e. K) gaussiennes (étape E40).

L'invention s'appuie en effet sur l'hypothèse que le bruit d'acquisition de l'image tomographique im3D est essentiellement un bruit aléatoire gaussien, et que de ce fait, les niveaux de gris des différentes phases du matériau composite de la pièce 2 ont une distribution gaussienne. L'histogramme HIST de l'image im3D correspond selon cette hypothèse à une mixture de plusieurs gaussiennes, et plus précisément de K gaussiennes, K désignant le nombre de phases dans le matériau composite (K=2 dans l'exemple envisagé ici).

Pour identifier les K distributions gaussiennes présentes dans l'histogramme normalisé HIST, le dispositif d'estimation 1 met en œuvre, dans le mode de réalisation décrit ici, une technique de déconvolution de gaussiennes s'appuyant sur l'algorithme espérance-maximisation, aussi plus communément appelé algorithme EM (Expectation Maximisation) et décrit en détail dans le document de Dempster et al. cité précédemment.

Cet algorithme EM permet au dispositif d'estimation 1 de déterminer, pour chacune des K distributions gaussiennes $G_i$, i=1,...,K présentes dans l'histogramme HIST, divers paramètres la caractérisant, à savoir :

- sa moyenne $m_i$,
- son écart-type $\sigma_i$ ou sa variance $\sigma_i^2$ ; et
- la proportion $\alpha_i$ de cette distribution gaussienne dans l'histogramme HIST.

De façon connue, l'algorithme EM permet de maximiser la vraisemblance de paramètres de modèles probabilistes (i.e. des paramètres précités caractérisant des distributions gaussiennes ici), et s'appuie à cet effet sur la mise en œuvre, au cours d'une pluralité d'itérations, de deux étapes :

- une étape E d'évaluation d'une espérance où l'on calcule l'espérance de la vraisemblance en tenant compte des dernières estimations des paramètres ; et
- une étape M de maximisation où l'on estime le maximum de vraisemblance des paramètres en maximisant la vraisemblance trouvée à l'étape E.

Dans le mode de réalisation décrit ici, ces étapes E et M sont plus précisément implémentées de la façon suivante.

L'algorithme EM est dans un premier temps initialisé avec une estimation dite initiale des paramètres des gaussiennes. Cette estimation initiale correspond à des valeurs des paramètres définies par défaut ou dérivées à partir de données connues fournies par exemple sur la pièce 2 en matériau composite (ex. proportion des deux phases dans le matériau composite).

Puis, pour chaque itération iter $\geq$ 1 mise en œuvre :

- au cours de l'étape E(iter) :

   (1) on estime, pour chacune des K gaussiennes à extraire de l'histogramme, à partir des paramètres déterminés à l'itération iter-1 (ou à partir de l'estimation initiale des paramètres pour iter=1), des quantités appelées responsabilités notées $\mu_k$, k=1,...,K, pour chaque classe de niveaux de gris de l'histogramme HIST (représentée par un représentant x, par exemple x est le niveau de gris associé à la classe lorsque la classe comprend un unique niveau de gris, ou le barycentre des niveaux de gris de la classe lorsque la classe regroupe plusieurs niveaux de gris), ces responsabilités étant définies par :

$$\mu_k(x) = \frac{D_k(x)}{\sum_{j=1}^{K} D_j(x)}$$

où $D_j$ désigne ici une fonction gaussienne définie à partir de l'écart type et de la variance estimée à l'itération iter-1, soit :

$$D_j(x) = \frac{\alpha_j}{\sigma_j\sqrt{2\pi}} \exp\left(-\frac{(x - m_j)^2}{2\sigma_j^2}\right)$$

(2) L'espérance de la vraisemblance LE est alors donnée par :

$$LE = \prod_{j=1}^{K} \prod_{i=1}^{N} \frac{1}{\sigma_j\sqrt{2\pi}} \exp\left(-\frac{(HIST(x_i) - m_j)^2}{2\sigma_j^2}\right)$$

où N désigne le nombre de classes de l'histogramme HIST (ou de niveaux de gris lorsque chaque classe de l'histogramme comprend un unique niveau de gris), $x_i$ le représentant de la classe i de l'histogramme HIST, i=1,...,N, et $HIST(x_i)$ la valeur de l'histogramme pour la classe i, K désignant le nombre de gaussiennes extraites de l'histogramme HIST.

- au cours de l'étape M(iter) : le dispositif d'estimation 1 maximise l'espérance de la vraisemblance LE (ou de façon équivalente le logarithme de l'espérance de la vraisemblance LE pour simplifier) par rapport aux paramètres des gaussiennes. Le calcul et l'annulation des dérivées partielles du logarithme de l'espérance de la vraisemblance LE par rapport aux paramètres (moyenne et écart-type) des K gaussiennes conduit au calcul par le dispositif d'estimation 1 des valeurs de moyennes, d'écart-types et de proportions suivantes pour les K gaussiennes :

$$\widehat{m}_k = \frac{1}{N} \sum_{i=1}^{N} \mu_k(x_i) HIST(x_i)$$

$$\widehat{\sigma}_k = \frac{1}{N} \sum_{i=1}^{N} (\mu_k(x_i) HIST(x_i) - \widehat{m}_k)^2$$

$$\widehat{\alpha}_k = \frac{1}{N} \sum_{i=1}^{N} \mu_k(x_i)$$

pour k=1,..,K.

Ces étapes E et M sont répétées jusqu'à vérification d'un critère d'arrêt prédéterminé. La vraisemblance LE augmente ainsi à chaque itération.

Dans le mode de réalisation décrit ici, le dispositif d'estimation 1 stoppe les itérations lorsque qu'il détecte que la somme des valeurs absolues des différences entre les paramètres des gaussiennes estimés ($\widehat{m}_k$,$\widehat{\sigma}_k$ et $\widehat{\alpha}_k$ pour

k=1,...,K) via l'algorithme EM lors de deux itérations consécutives iter et iter+1 est inférieure à un seuil $\varepsilon$ prédéterminé, $\varepsilon \geq 0$ (ex. $\varepsilon=10^3$). Autrement dit, selon le critère d'arrêt adopté par le dispositif d'estimation 1, l'exécution de l'algorithme EM s'arrête lorsque les valeurs des estimations des paramètres caractérisant les K gaussiennes n'évoluent peu ou plus entre deux itérations successives.

Bien entendu, d'autres critères d'arrêt de l'algorithme EM peuvent être considérés en variante ou en complément du critère précité, comme par exemple, l'atteinte d'un nombre maximal d'itérations et/ou la comparaison par rapport à un seuil $\varepsilon \geq 0$ prédéterminé (défini par exemple expérimentalement, par exemple $\varepsilon=10^{-3}$) de l'erreur entre l'histogramme HIST et la somme des gaussiennes caractérisées par les paramètres estimés par l'algorithme EM.

Il convient de noter que bien que l'algorithme EM soit un algorithme très efficace pour l'estimation de paramètres de modèles probabilistes, cet algorithme peut ne pas toujours converger vers un maximum global lors de l'étape M. Cette situation se produit notamment lorsqu'il est impossible ou quasiment impossible d'identifier dans l'histogramme les K gaussiennes recherchées. Elle se traduit en général par une convergence très lente et peut être détectée en comparant le nombre d'itérations de l'algorithme EM à un nombre maximal d'itérations autorisé (ex. 1000, 2000 voire 10000).

La **figure 3C** illustre deux distributions gaussiennes G1 et G2 extraites de l'histogramme HIST par application de l'algorithme EM.

La distribution gaussienne G1 est caractérisée par une moyenne $m_1=22000$, un écart-type $\sigma_1=4002$ et une proportion $\alpha_1=40\%$ dans l'histogramme HIST. La distribution gaussienne G2 est caractérisée par une moyenne $m_2=25997$, un écart-type $\sigma_2=2001$ et une proportion $\alpha_2=60\%$ dans l'histogramme HIST.

La somme des deux gaussiennes G1 et G2 est représentée sur la figure 3C par la courbe $\Sigma$. Comme il peut être constaté, il existe une très bonne adéquation entre cette somme et l'histogramme HIST.

On note que dans le mode de réalisation décrit ici, l'algorithme EM estime pour chaque gaussienne extraite de l'histogramme HIST, sa moyenne, son écart-type et sa proportion dans l'histogramme HIST. En variante, seulement une partie de ces paramètres caractérisant chaque gaussienne présente dans l'histogramme HIST peut être estimée par l'algorithme EM, tandis que les autres paramètres sont fournis au dispositif d'estimation 1. En particulier, la moyenne et la proportion de chaque gaussienne dépendent du matériau composite dans lequel la pièce 2 est réalisée et peuvent être fournies au dispositif d'estimation 1 par un bureau d'études par exemple. En revanche, l'écart-type de chaque gaussienne dépend directement du bruit d'acquisition de l'image im3D et est préférentiellement estimée lors de la déconvolution de gaussiennes, par l'algorithme EM dans le mode de réalisation décrit ici.

En outre, dans le mode de réalisation décrit ici, le dispositif d'estimation 1 applique pour extraire les K gaussiennes de l'histogramme l'algorithme EM. En variante, d'autres méthodes peuvent être utilisées pour extraire les gaussiennes de l'histogramme et déterminer leurs paramètres, comme par exemple une méthode Monte Carlo basée sur des chaînes de Markov, une méthode des moments (ou « moment matching » en anglais), une méthode spectrale ou graphique, voire une simulation.

Dans le mode de réalisation décrit ici, afin de proposer des indices de qualité robustes aux changements de dynamiques des images (ex. 8 bits, 16 bits, etc.), une normalisation de certains paramètres des gaussiennes extraites lors de l'étape E40 est réalisée par le dispositif d'estimation 1 pour que le support des gaussiennes extraites reste compris entre 0 et 1 (étape E50).

Il convient de noter que bien que le support d'une gaussienne soit infini, d'un point de vue théorique, plus de 99% du signal de la gaussienne est compris entre sa moyenne et plus ou moins 3 fois son écart-type. Les inventeurs ont donc avantageusement considéré que le support de la somme des gaussiennes était majoritairement compris dans un intervalle défini par sa borne minimale :

$$Imin=min(m_1-3\sigma_1,m_2-3\sigma_2,..., m_K-3\sigma_K)$$

et par sa borne maximale :

$$Imax=max(m_1+3\sigma_1,m_2+3\sigma_2,..., m_K+3\sigma_K).$$

Le dispositif d'estimation 1 normalise ainsi, lors de l'étape E50, les moyennes et les écart-types des gaussiennes $G_i$ extraites de l'histogramme HIST de la façon suivante :

$$m_i = \frac{m_i - Imin}{Imax - Imin}$$

$$\sigma_i = \frac{\sigma_i}{Imax - Imin}$$

pour i=1,...,K.

Les proportions de chacune des gaussiennes dans l'histogramme ne sont bien entendu pas concernées ni impactées par cette normalisation.

La **figure 3D** illustre les gaussiennes $G_1$ et $G_2$ et la somme $\Sigma$ de la figure 3C après normalisation. L'axe des abscisses correspond maintenant à une dynamique normalisée entre 0 et 1.

Conformément à l'invention, le dispositif d'estimation 1 estime alors à partir des paramètres normalisés des gaussiennes $G_i$, i=1,...,K extraites de l'histogramme HIST, un ou plusieurs indices de qualité de l'image im3D (étape E60).

Dans le mode de réalisation décrit ici, plusieurs indices de qualité sont estimés par le dispositif d'estimation 1 à partir des moyennes et des écart-types normalisés des gaussiennes.

Plus spécifiquement, dans le mode de réalisation décrit ici, le premier indice I1 estimé par le dispositif d'estimation 1 s'appuie sur la notion de contraste entre les phases du matériau composite de la pièce 2.

Les inventeurs ont en effet considéré, pour définir ce premier indice, que si toutes les gaussiennes présentes dans l'histogramme HIST étaient bien séparées les unes des autres (autrement dit, pas d'intersection entre les supports des gaussiennes), alors distinguer les différentes composantes ou phases du matériau composite de la pièce 2 serait trivial. Autrement dit, l'image im3D pourrait être considérée comme étant de bonne qualité et correspondre à un indice de qualité proche de 1. A l'inverse, si les gaussiennes sont confondues, cela signifie qu'il existe peu de contrastes entre les différentes phases du matériau composite (séparation des phases et donc des gaussiennes quasi impossible voire impossible), autrement dit que l'image im3D est de mauvaise qualité et doit correspondre à un indice proche de 0.

Sur la base de ce constat, l'indice I1 est estimé par le dispositif d'estimation 1 selon l'enchaînement d'étapes suivant.

Les gaussiennes $G_i$, i=1,...,K extraites de l'histogramme HIST sont classées tout d'abord par le dispositif d'estimation 1 par valeurs de moyenne croissantes. Par souci de simplification, on conserve les mêmes notations pour les gaussiennes après classification, autrement dit, les gaussiennes $G_i$, i=1,...,K sont telles que $m_1 \leq m_2 \leq ... \leq m_K$.

Puis il détermine, pour chaque paire de gaussiennes contiguës $(G_i, G_{i+1})$, un facteur $z_i$ tel que :

$$z_i = m_i - m_{i+1} + \omega(\sigma_i + \sigma_{i+1})$$

où $\omega$ désigne une constante prédéterminée. Par exemple $\omega$ = 1.

Le dispositif d'estimation 1 dérive à partir de ce facteur $z_i$, un indice de qualité I1(i) pour la paire de gaussiennes $(G_i, G_{i+1})$, à l'aide d'une fonction f bornée entre 0 et 1. Dans le mode de réalisation décrit ici, la fonction f utilisée pour déterminer l'indice de qualité I1(i) est une fonction sigmoïde. Autrement dit, le dispositif d'estimation 1 évalue chaque indice I1(i) selon :

$$I1(i) = f(z_i) = \frac{1}{1 + e^{-\lambda z_i}}$$

où $\lambda$ désigne un nombre négatif prédéfini.

En variante, d'autres fonctions f bornées entre 0 et 1 peuvent être considérées pour définir l'indice de qualité I1(i), comme par exemple une fonction f s'appuyant sur la fonction tangente hyperbolique.

Le dispositif d'estimation 1 calcule ensuite la moyenne des indices de qualité I1(i) et obtient ainsi l'indice I1. Il convient de noter que pour K=2, comme dans l'exemple envisagé ici, une seule paire de gaussiennes est identifiée dans l'histogramme HIST de sorte que le dispositif d'estimation 1 obtient directement l'indice de qualité I1 par le calcul de $f(z_1)$.

Dans le mode de réalisation décrit ici, le dispositif d'estimation 1 estime également lors de l'étape E60, un deuxième indice de qualité I2 de l'image im3D. Ce deuxième indice de qualité I2 quantifie le recouvrement entre les gaussiennes $G_i$, i=1,...,K extraites de l'histogramme HIST.

En effet, les inventeurs ont considéré, pour définir ce deuxième indice de qualité, que plus la surface de recouvrement des gaussiennes est faible par rapport à la surface totale occupée par les gaussiennes, plus les gaussiennes sont bien séparées, et la qualité de l'image est bonne (correspondant à un indice I2 proche de 1). A l'inverse, une surface de recouvrement importante des gaussiennes laisse présager une image de mauvaise qualité à laquelle un indice I2 proche de 0 doit être attribué.

Pour estimer l'indice I2, le dispositif d'estimation 1 évalue donc la surface occupée par les gaussiennes extraites de l'histogramme HIST en dehors des zones de recouvrement existant entre ces gaussiennes. La figure 3D illustre à titre indicatif la zone de recouvrement R entre les gaussiennes $G_1$ et $G_2$ extraites de l'histogramme normalisé HIST de la figure 3B.

Plus précisément, il estime l'indice I2 selon la formule suivante :

$$I2 = \int_0^1 \left[ \max_{1 \leq k1 \leq K} D_{k1}(x) - \max_{1 \leq k2 \leq K, k2 \neq k1} D_{k2}(x) \right] dx$$

avec :

$$D_k(x) = \frac{\alpha_k}{\sigma_k \sqrt{2\pi}} \exp\left( -\frac{(x - m_k)^2}{2\sigma_k^2} \right)$$

Dans l'exemple envisagé ici où K=2 on obtient :

$$I2 = \int_0^1 |D_1(x) - D_2(x)| \, dx$$

On note que dans le mode de réalisation décrit ici, les indices I1 et I2 sont choisis de sorte à tendre vers 1 lorsque la qualité de l'image im3D est bonne et inversement vers 0 lorsque l'image im3D est de mauvaise qualité. Toutefois, bien entendu une autre convention peut être considérée dès lors que sa signification est connue des opérateurs destinés à utiliser ces indices de qualité.

Enfin, dans le mode de réalisation décrit ici, le dispositif d'estimation 1 estime également K indices de qualité $I3(G_i)$ de l'image im3D définis respectivement pour les K gaussiennes $G_i$ extraites de l'histogramme HIST, i=1,...,K, et où chaque indice de qualité $I3(G_i)$ est défini comme le ratio entre la moyenne $m_i$ et l'écart type $\sigma_i$ de cette gaussienne. Autrement dit, chaque indice de qualité $I3(G_i)$ définit un rapport signal-sur-bruit :

$$I3(G_i) = \frac{m_i}{\sigma_i}$$

Grâce à l'étape de déconvolution de gaussiennes E40, le calcul d'un rapport signal-sur-bruit est possible pour chaque phase du matériau composite de la pièce 2. Le critère de Rose consistant à affirmer qu'une image est de bonne qualité (et plus précisément qu'on peut bien distinguer les caractéristiques d'une image avec un taux de confiance de 100%) si le rapport signal-sur-bruit est supérieur à 5 peut alors être appliqué pour chacune des gaussiennes extraites de l'histogramme HIST.

Les indices de qualité de l'image im3D I1, I2 et $I3(G_i)$, i=1,...K, sont ensuite fournis par le dispositif d'estimation 1 à une entité apte à utiliser et/ou exploiter ces indices, ou stockés dans sa mémoire non volatile 6 pour une utilisation ultérieure, ou encore présentés à un utilisateur, par exemple sur l'écran 7 du dispositif d'estimation 1.

Il convient de noter que les indices I1, I2 et I3, bien qu'évoluant dans le même sens du fait des conventions adoptées (indices I1 et I2 proches de 1 lorsque la qualité de l'image 3D est bonne ou proches de 0 dans le cas contraire), n'évoluent pas de manière identique en fonction des paramètres des gaussiennes extraites de l'histogramme.

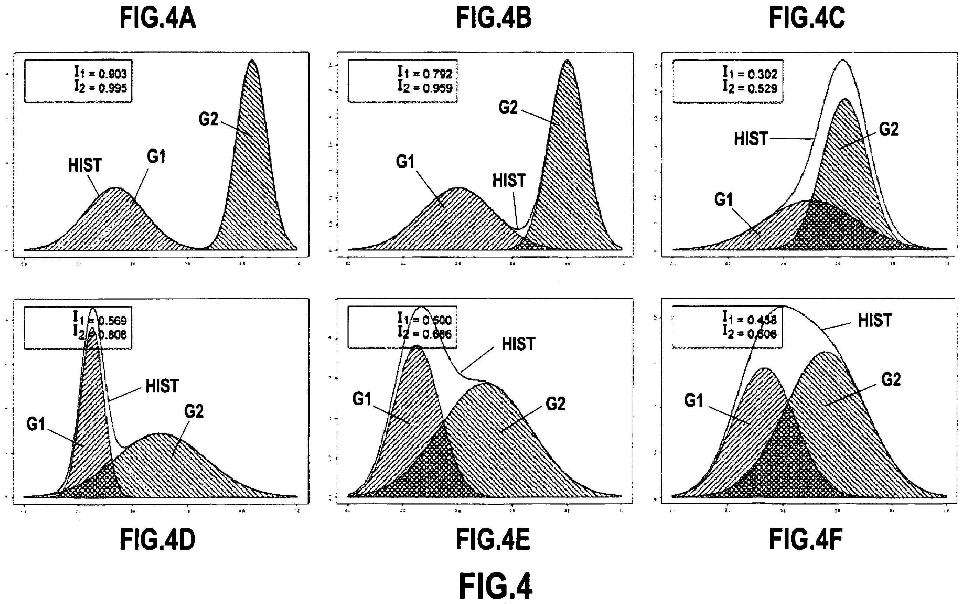

A titre illustratif, les figures 4A-4F illustrent des configurations de gaussiennes différentes et les indices I1 et I2 en résultant. Plus précisément :

- La figure 4A représente deux gaussiennes G1 et G2 extraites d'un histogramme HIST et dont les paramètres estimés sont :

  ◦ pour la gaussienne G1 : $m_1$=8000, $\sigma_1$=4000, $\alpha_1$=40%
  ◦ pour la gaussienne G2 : $m_2$=26000, $\alpha_2$=2000, $\alpha_2$=60%

  Il en résulte des indices de qualité I1=0.903 et I2=0.995.
- La figure 4B représente deux gaussiennes G1 et G2 extraites d'un histogramme HIST et dont les paramètres estimés sont :

- pour la gaussienne G1 : $m_1$=14000, $\sigma_1$=4000, $\alpha_1$=40%
- pour la gaussienne G2 : $m_2$=26000, $\alpha_2$=2000, $\alpha_2$=60%

Il en résulte des indices de qualité I1=0.792 et I2=0.959.
- La figure 4C représente deux gaussiennes G1 et G2 extraites d'un histogramme HIST et dont les paramètres estimés sont :

- pour la gaussienne G1 : $m_1$=23000, $\sigma_1$=4000, $\alpha_1$=40%
- pour la gaussienne G2 : $m_2$=26000, $\alpha_2$=2000, $\alpha_2$=60%

Il en résulte des indices de qualité I1=0.302 et I2=0.529.

Autrement dit, un décalage de la moyenne de la gaussienne G1 vers la moyenne de la gaussienne G2 se traduit par une diminution substantielle des deux indices I1 et I2, l'indice I1 diminuant toutefois plus fortement que l'indice I2.
De façon similaire :

- La figure 4D représente deux gaussiennes G1 et G2 extraites d'un histogramme HIST et dont les paramètres estimés sont :

- pour la gaussienne G1 : $m_1$=23000, $\sigma_1$=500, $\alpha_1$=40%
- pour la gaussienne G2 : $m_2$=26000, $\sigma_2$=2000, $\alpha_2$=60%

Il en résulte des indices de qualité I1=0.569 et I2=0.808.
- La figure 4E représente deux gaussiennes G1 et G2 extraites d'un histogramme HIST et dont les paramètres estimés sont :

- pour la gaussienne G1 : $m_1$=23000, $\sigma_1$=1000, $\alpha_1$=40%
- pour la gaussienne G2 : $m_2$=26000, $\alpha_2$=2000, $\alpha_2$=60%

Il en résulte des indices de qualité I1=0.500 et I2=0.686.
- La figure 4F représente deux gaussiennes G1 et G2 extraites d'un histogramme HIST et dont les paramètres estimés sont :

- pour la gaussienne G1 : $m_1$=23000, $\sigma_1$=1500, $\alpha_1$=40%
- pour la gaussienne G2 : $m_2$=26000, $\sigma_2$=2000, $\alpha_2$=60%

Il en résulte des indices de qualité I1=0.438 et I2=0.608.

Autrement dit, une augmentation de l'écart type de la gaussienne G1 se traduit par une diminution des deux indices I1 et I2, l'indice I2 diminuant toutefois plus fortement que l'indice I1.
Le choix d'un ou de plusieurs indices parmi ces indices sera ainsi préférentiellement guidé en fonction de l'application visée.
Ainsi, l'invention propose une méthode permettant de mesurer automatiquement la qualité d'une image 3D codée en niveaux de gris, telle une image tomographique, d'une pièce de matériau composite. Ces indices de qualité peuvent être utilisés de différentes manières. Cette mesure offerte notamment via les différents indices de qualité détaillés précédemment, présente de nombreuses caractéristiques avantageuses. Elle est ainsi répétitive, donnant un outil objectif pour vérifier la qualité d'une image ou comparer des images entre elles, précise, robuste au bruit, rapide (quelques secondes sont nécessaires seulement pour le traitement d'une image), normalisée et facilement interprétable, ne requiert pas de paramètre à l'exception du nombre de gaussiennes à extraire, et ne s'appuie pas sur une image de référence.
Les indices de qualité dérivés conformément à l'invention peuvent être utilisés de différentes manières, en expertise comme en ligne de production. Ainsi, par exemple, ils peuvent être utilisés pour optimiser les paramètres d'acquisition et de reconstruction des images 3D, pour comparer des images 3D entre elles, ou encore pour déceler d'éventuelles dérives du système d'acquisition de l'image 3D en chaîne de production (ex. dérives du détecteur ou tube à rayon X d'un tomographe, notamment lors du vieillissement du tomographe), etc. Ces applications peuvent s'appuyer

**EP 3 149 705 B1**

sur un ou plusieurs indices de qualité estimés conformément à l'invention.

## Revendications

1. Procédé d'estimation d'au moins un indice de qualité (I1,I2,I3) d'une image (im3D) en trois dimensions codée en niveaux de gris d'une pièce (2) de matériau composite, le procédé d'estimation étant mis en œuvre par un ordinateur et comprenant :

   - une étape d'obtention (E20) d'un histogramme (HIST) à partir de l'image représentant pour chaque classe d'une pluralité de classes comprenant chacune au moins un niveau de gris, un nombre de voxels de l'image ayant un niveau de gris appartenant à cette classe ;
   - une étape d'extraction (E40) d'un nombre prédéterminé de gaussiennes présentes dans l'histogramme, ce nombre prédéterminé correspondant à un nombre de phases distinctes présentes dans le matériau composite supérieur à deux;
   - une étape d'estimation (E60) d'au moins un indice de qualité de l'image à partir de paramètres caractérisant les gaussiennes extraites de l'histogramme.

2. Procédé d'estimation selon la revendication 1 dans lequel l'étape d'extraction comprend, pour au moins une gaussienne, l'estimation d'au moins un paramètre caractérisant cette gaussienne parmi :

   - une moyenne de la gaussienne ;
   - un écart-type ou une variance de la gaussienne ; et
   - une proportion de la gaussienne dans l'histogramme.

3. Procédé d'estimation selon la revendication 1 ou 2 dans lequel ledit au moins un indice de qualité de l'image comprend un indice I1 obtenu en moyennant sur chaque paire $(G_i, G_{i+1})$ de gaussiennes contiguës extraites de l'histogramme, un indice de qualité I1(i) associé à ladite paire $(G_i, G_{i+1})$ et estimé selon :

$$I1(i) = f(m_i - m_{i+1} + \omega.(\sigma_i + \sigma_{i+1}))$$

   où :

   - $m_i$ et $m_{i+1}$ désignent respectivement les moyennes des gaussiennes $G_i$ et $G_{i+1}$ avec $m_i < m_{i+1}$ ;
   - $\sigma_i$ et $\sigma_{i+1}$ désignent respectivement les écart-types des gaussiennes $G_i$ et $G_{i+1}$ ;
   - $\omega$ désigne une constante prédéterminée ; et
   - f désigne une fonction bornée prenant ses valeurs entre 0 et 1.

4. Procédé d'estimation selon l'une quelconque des revendications 1 à 3 dans lequel ledit au moins un indice de qualité de l'image comprend un indice I2 quantifiant un recouvrement entre les gaussiennes extraites de l'histogramme.

5. Procédé d'estimation selon l'une quelconque des revendications 1 à 4 dans lequel ledit au moins un indice de qualité de l'image comprend, pour au moins une gaussienne G extraite de l'histogramme, un indice I3(G) associé à ladite gaussienne et défini comme le ratio entre la moyenne et l'écart type de cette gaussienne.

6. Procédé d'estimation selon l'une quelconque des revendications 1 à 5 dans lequel l'étape d'extraction (E30) comprend l'application d'un algorithme d'espérance-maximisation (EM).

7. Procédé d'estimation selon l'une quelconque des revendications 1 à 6 comprenant en outre une étape de normalisation (E20) de l'histogramme, les gaussiennes étant extraites de l'histogramme normalisé lors de l'étape d'extraction.

8. Procédé d'estimation selon l'une quelconque des revendications 1 à 7 comprenant en outre une étape de normalisation (E40) des paramètres caractérisant les gaussiennes, ledit au moins un indice de qualité de l'image étant estimé à partir des paramètres caractérisant les gaussiennes normalisés.

9. Programme d'ordinateur comportant des instructions pour l'exécution des étapes du procédé d'estimation selon l'une quelconque des revendications 1 à 8 lorsque ledit programme est exécuté par un ordinateur.

10. Support d'enregistrement lisible par un ordinateur sur lequel est enregistré un programme d'ordinateur comprenant des instructions pour l'exécution des étapes du procédé d'estimation selon l'une quelconque des revendications 1 à 8.

11. Dispositif d'estimation (1) d'au moins un indice de qualité d'une image en trois dimensions codée en niveaux de gris d'une pièce de matériau composite, le dispositif d'estimation comprenant :

- un module d'obtention d'un histogramme à partir de l'image représentant pour chaque classe d'une pluralité de classes comprenant chacune au moins un niveau de gris, un nombre de voxels de l'image ayant un niveau de gris appartenant à cette classe ;
- un module d'extraction d'un nombre prédéterminé de gaussiennes présentes dans l'histogramme, ce nombre prédéterminé correspondant à un nombre de phases distinctes présentes dans le matériau composite supérieur à deux;
- un module d'estimation d'au moins un indice de qualité de l'image à partir de paramètres caractérisant les gaussiennes extraites de l'histogramme.

**Patentansprüche**

1. Verfahren zur Schätzung wenigstens eines Qualitätsindexes (I1, I2, I3) eines graustufencodierten dreidimensionalen Bildes (im3D) eines Teils (2) aus Verbundwerkstoff, wobei das Schätzverfahren durch einen Computer durchgeführt wird und umfasst:

- einen Schritt zum Erhalten (E20) eines Histogramms (HIST) anhand des Bildes, das für jede Klasse einer Vielzahl von Klassen, die jeweils wenigstens eine Graustufe umfassen, eine Anzahl von Voxeln des Bildes mit einer zu dieser Klasse gehörenden Graustufe darstellt,
- einen Schritt zum Extrahieren (E40) einer vorbestimmten Anzahl von Gauß-Funktionen, die in dem Histogramm vorhanden sind, wobei diese vorbestimmte Anzahl einer Anzahl von in dem Verbundwerkstoff vorhandenen unterschiedlichen Phasen entspricht, welche größer als zwei ist,
- einen Schritt zum Schätzen (E60) wenigstens eines Qualitätsindexes des Bildes anhand von Parametern, welche die aus dem Histogramm extrahierten Gauß-Funktionen kennzeichnen.

2. Schätzverfahren nach Anspruch 1, bei dem der Extraktionsschritt für wenigstens eine Gauß-Funktion die Schätzung wenigstens eines diese Gauß-Funktion kennzeichnenden Parameters umfasst, aus:

- einem Mittelwert der Gauß-Funktion,
- einer Standardabweichung oder eine Varianz der Gauß-Funktion, und
- einem Anteil der Gauß-Funktion in dem Histogramm.

3. Schätzverfahren nach Anspruch 1 oder 2, bei dem der wenigstens eine Qualitätsindex des Bildes einen Index I1 aufweist, der dadurch erhalten wird, dass über jedes Paar $(G_i, G_{i+1})$ von aus dem Histogramm extrahierten aneinandergrenzenden Gauß-Funktionen ein Qualitätsindex I1 (i) gemittelt wird, der dem Paar $(G_i, G_{i+1})$ zugeordnet ist und geschätzt wird nach:

$$I1(i) = f(m_i - m_{i+1} + \omega.(\sigma_i + \sigma_{i+1}))$$

worin:

- $m_i$ und $m_{i+1}$ jeweils die Mittelwerte der Gauß-Funktionen $G_i$ und $G_{i+1}$ mit $m_i < m_{i+1}$ bezeichnen,
- $\sigma_i$ und $\sigma_{i+1}$ jeweils die Standardabweichungen der Gauß-Funktionen $G_i$ und $G_{i+1}$ bezeichnen,
- $\omega$ eine vorbestimmte Konstante bezeichnet, und
- f eine begrenzte Funktion bezeichnet, deren Werte zwischen 0 und 1 liegen.

4. Schätzverfahren nach einem der Ansprüche 1 bis 3, bei dem der wenigstens eine Qualitätsindex des Bildes einen Index I2 umfasst, der eine Überlappung zwischen den aus dem Histogramm extrahierten Gauß-Funktionen quantifiziert.

5. Schätzverfahren nach einem der Ansprüche 1 bis 4, bei dem der wenigstens eine Qualitätsindex des Bildes für wenigstens eine aus dem Histogramm extrahierte Gauß-Funktion G einen Index I3(G) umfasst, welcher der Gauß-Funktion zugeordnet und als das Verhältnis zwischen dem Mittelwert und der Standardabweichung dieser Gauß-Funktion definiert ist.

6. Schätzverfahren nach einem der Ansprüche 1 bis 5, bei dem der Extraktionsschritt (E30) die Anwendung eines Erwartungs-Maximierungs-Algorithmus (EM) umfasst.

7. Schätzverfahren nach einem der Ansprüche 1 bis 6, ferner umfassend einen Schritt zum Normalisieren (E20) des Histogramms, wobei die Gauß-Funktionen während des Extraktionsschritts aus dem normalisierten Histogramm extrahiert werden.

8. Schätzverfahren nach einem der Ansprüche 1 bis 7, ferner umfassend einen Schritt zum Normalisieren (E40) der die Gauß-Funktionen kennzeichnenden Parameter, wobei der wenigstens eine Qualitätsindex des Bildes anhand der die normalisierten Gauß-Funktionen kennzeichnenden Parameter geschätzt wird.

9. Computerprogramm, umfassend Befehle für die Durchführung der Schritte des Schätzverfahrens nach einem der Ansprüche 1 bis 8, wenn das Programm durch einen Computer ausgeführt wird.

10. Durch einen Computer lesbarer Aufzeichnungsträger, auf dem ein Computerprogramm gespeichert ist, das Befehle für die Durchführung der Schritte des Schätzverfahrens nach einem der Ansprüche 1 bis 8 umfasst.

11. Vorrichtung zur Schätzung (1) wenigstens eines Qualitätsindexes eines graustufencodierten dreidimensionalen Bildes eines Teils aus Verbundwerkstoff, wobei die Schätzvorrichtung umfasst:

- ein Modul zum Erhalten eines Histogramms anhand des Bildes, das für jede Klasse einer Vielzahl von Klassen, die jeweils wenigstens eine Graustufe umfassen, eine Anzahl von Voxeln des Bildes mit einer zu dieser Klasse gehörenden Graustufe darstellt,
- ein Modul zum Extrahieren einer vorbestimmten Anzahl von Gauß-Funktionen, die in dem Histogramm vorhanden sind, wobei diese vorbestimmte Anzahl einer Anzahl von in dem Verbundwerkstoff vorhandenen unterschiedlichen Phasen entspricht, welche größer als zwei ist,
- ein Modul zum Schätzen wenigstens eines Qualitätsindexes des Bildes anhand von Parametern, welche die aus dem Histogramm extrahierten Gauß-Funktionen kennzeichnen.

**Claims**

1. An estimation method for estimating at least one quality index (I1, I2, I3) of a gray-scale encoded three-dimensional image (im3D) of a composite material part (2), the estimation method comprising:

   • an obtaining step (E20) for obtaining a histogram (HIST) from the image, representing for each class of a plurality of classes each comprising at least one gray-scale level, the number of voxels of the image having a gray-scale level belonging to the class;
   • an extraction step (E40) for extracting a predetermined number of Gaussian functions present in the histogram, the predetermined number corresponding to a number of distinct phases present in the composite material greater than two ; and
   • an estimation step (E60) for estimating at least one quality index of the image from parameters characterizing the Gaussian functions extracted from the histogram.

2. An estimation method according to claim 1, wherein the extraction step comprises, for at least one Gaussian function, estimating at least one parameter characterizing the Gaussian function, selected from:

   • the mean of the Gaussian function;
   • the standard deviation or the variance of the Gaussian function; and
   • the proportion of the Gaussian function in the histogram.

3. An estimation method according to claim 1 or claim 2, wherein said at least one quality index of the image comprises an index I1 obtained by averaging on each pair $(G_i, G_{i+1})$ of contiguous Gaussian functions extracted from the histogram a quality index 11(i) associated with said pair $(G_i, G_{i+1})$ and estimated using:

$$I1(i) = f(m_i - m_{i+1} + \omega.(\sigma_i + \sigma_{i+1}))$$

where:

- $m_i$ and $m_{i+1}$ designate the respective means of the Gaussian functions $G_i$ and $G_{i+1}$, with $m_i < m_{i+1}$;
- $\sigma_i$ and $\sigma_{i+1}$ designate the respective standard deviations of the Gaussian functions $G_i$ and $G_{i+1}$;
- $\omega$ designates a predetermined constant; and
- $\underline{f}$ designates a bounded function having values in the range 0 to 1.

4. An estimation method according to any one of claims 1 to 3, wherein said at least one quality index of the image comprises an index 12 quantifying overlap between the Gaussian functions extracted from the histogram.

5. An estimation method according to any one of claims 1 to 4, wherein said at least one quality index of the image comprises, for at least one Gaussian function G extracted from the histogram, an index I3(G) associated with said Gaussian function and defined as the ratio between the mean and the standard deviation of that Gaussian function.

6. An estimation method according to any one of claims 1 to 5, wherein the extraction step (E30) comprises applying an expectation maximization (EM) algorithm.

7. An estimation method according to any one of claims 1 to 6, further comprising a step (E20) of normalizing the histogram, the Gaussian functions being extracted from the normalized histogram during the extraction step.

8. An estimation method according to any one of claims 1 to 7, further comprising a step (E40) of normalizing parameters characterizing the Gaussian functions, said at least one quality index of the image being estimated from parameters characterizing the normalized Gaussian functions.

9. A computer program including instructions for executing steps of the estimation method according to any one of claims 1 to 8 when said program is executed by a computer.

10. A computer readable data medium storing a computer program including instructions for executing steps of the estimation method according to any one of claims 1 to 8.

11. An estimation device (1) for estimating at least one quality index of a gray-scale encoded three-dimensional image of a composite material part, the estimation device comprising:

- a module for obtaining a histogram from the image, representing for each class of a plurality of classes each comprising at least one gray-scale level, the number of voxels of the image having a gray-scale level belonging to the class;
- a module for extracting a predetermined number of Gaussian functions present in the histogram, the predetermined number corresponding to a number of distinct phases present in the composite material greater than two ; and
- a module for estimating at least one quality index of the image from parameters characterizing the Gaussian functions extracted from the histogram.

**FIG.1**

| | |
|---|---|
| Obtention de l'image im3D | E10 |
| Calcul de l'histogramme HIST de l'image im3D | E20 |
| Normalisation de l'histogramme HIST | E30 |
| Extraction de K gaussiennes de l'histogramme HIST | E40 |
| Normalisation des paramêtres des K gaussiennes | E50 |
| Estimation des indices de qualité I1,I2 et I3 à partir des paramètres normalisés | E60 |

**FIG.2**

FIG.3A

FIG.3B

FIG.3C

FIG.3D

FIG.4D  FIG.4E  FIG.4F

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007019861 A

**Littérature non-brevet citée dans la description**

- **A.P. DEMPSTER et al.** Maximum Likelihood from incomplete data with the EM algorithm. *Journal of the Royal Statistical Society,* vol. B39 (1), 1-38